# FASCICULE DE BREVET EUROPEEN

(11) **EP 0 286 542 B1**
(45) Date de publication et mention de la délivrance du brevet: **18.11.1993**
(21) Numéro de dépôt: 88400851.7
(22) Date de dépôt: 08.04.1988
(51) Int. Cl.: B60N 2/30

(54) **Siège encastré pour le transport d'enfant dans un véhicule automobile**
Einbausitz für die Beförderung von Kindern in Kraftfahrzeugen
Boxed seat for the transport of children in automotive vehicles

(30) Priorité: 10.04.1987 FR 8705087
(43) Date de publication de la demande: 12.10.1988
(73) Titulaire: REGIE NATIONALE DES USINES RENAULT, 92109 Boulogne-Billancourt (FR)
(72) Inventeur: Laporte, Alain, F-92500 Rueil Malmaison (FR); Carrillo, Pierre-Louis, F-92500 Rueil Malmaison (FR)
(74) Mandataire: Ernst-Schonberg, Michel

(56) Documents cités:
- DE-A- 2 807 064
- DE-A- 2 825 329
- FR-A- 2 251 999
- FR-A- 2 536 349
- US-A- 4 541 654

## Description

L'invention concerne un siège encastré pour le transport d'enfants dans un véhicule automobile, susceptible d'occuper une position d'utilisation déployée et une position escamotée à l'intérieur d'un logement formé sur une banquette conforme au préambule de la revendication.

Un tel siège connu par les publications FR-A-2 251 999 ou US-A- 4 541 654 est encastré dans le dossier du siège et nécessite un aménagement spécial des ceintures de sécurité conventionnelles ou l'adjonction de ceintures de sécurité spécifiquement étudiées pour la retenue d'un passager enfant.

La publication DE-A-2 807 064 (correspondant au préambule de la revendication indépendante) décrit un siège dont le dossier et l'assise peuvent occuper une position de rangement dans les logements d'un dossier et d'une assise de la banquette du véhicule.

Le but de l'invention est de proposer un siège encastré simple et fonctionnel, économique à fabriquer dont la mise en oeuvre est particulièrement simple.

L'invention a donc pour objet un siège encastré dans un coussin, qui possède une position d'utilisation réhaussée dans le but de conférer au passager enfant un appui dorsal sur la banquette et une position de confort compatible avec l'utilisation d'une ceinture de sécurité conventionnelle d'un passager adulte.

Selon l'invention, les buts sont atteints conformément à la partie caractérisante de la revendication indépendante.

Le siège ainsi réalisé présente l'avantage de ne pas modifier l'aménagement de l'ensemble des sièges du véhicule et de s'adapter aisément aux structures des sièges existants.

Diverses autres caractéristiques et avantages de l'invention ressortiront de la description qui suit en référence aux dessins annexés dont :

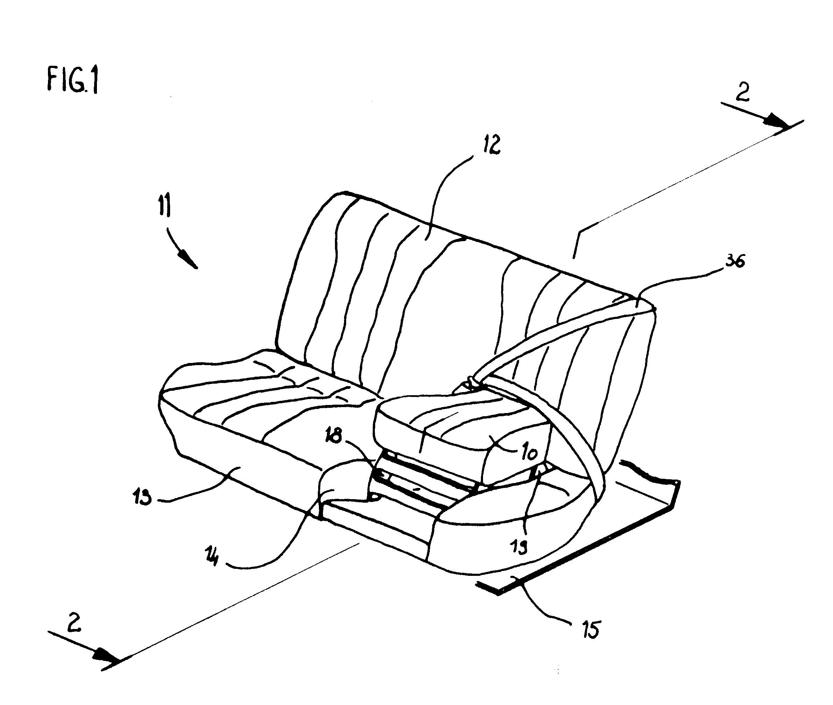

- la figure 1 est une vue en perspective d'une banquette arrière de véhicule automobile portant le siège de transport pour passager enfant en position érigée,
- la figure 2 est une vue en coupe longitudinale du siège selon la ligne 2-2 de la figure 1,
- la figure 3 est une vue en coupe longitudinale du siège en position encastrée de celui-ci.

Le siège 10 représenté au dessin fait partie d'une banquette 11 comportant un dossier 12 et une assise 13, cette dernière possédant un logement 14 de réception du siège 10, L'assise 13 est posée sur le plancher 15 de structure du véhicule portant les paliers support 16, 17 latéraux d'une liaison mécanique. Cette liaison mécanique est constituée par deux groupes de branches entretoisés 18, 19 sensiblement parallèles respectivement articulés par leurs extrémités autour de deux axes transversaux 20, 21 fixes parallèles portés par les paliers 16, 17 rigidement fixés au plancher 15. Les autres extrémités des branches 18, 19 sont respectivement articulées autour d'axes transversaux 22, 23 portés par un plateau ou coquille 25 recouvert du coussin 26 du siège 10.

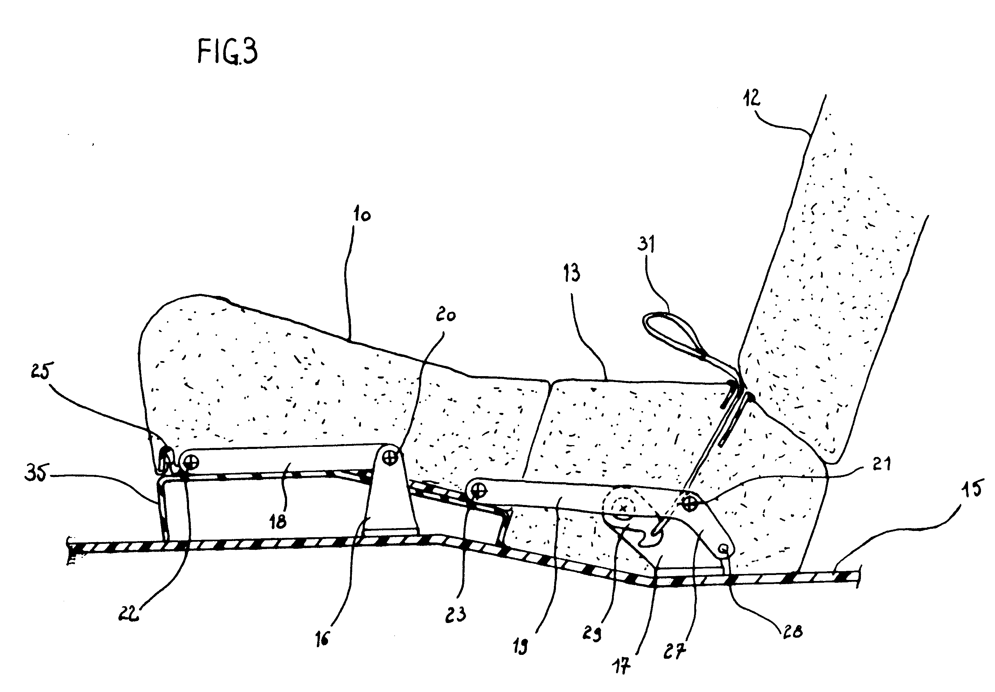

Ainsi que le montre la figure 3, le groupe de branches 19 s'étend en direction de la partie postérieure de la banquette par des parties coudées 27 entretoisées, dont l'une porte un téton 28 coopérant avec un crochet de retenue 29. Le crochet 29 est monté à rotation autour d'un axe fixe 30 également porté par les paliers latéraux 17 et peut être manoeuvré manuellement à l'aide d'une tirette 31.

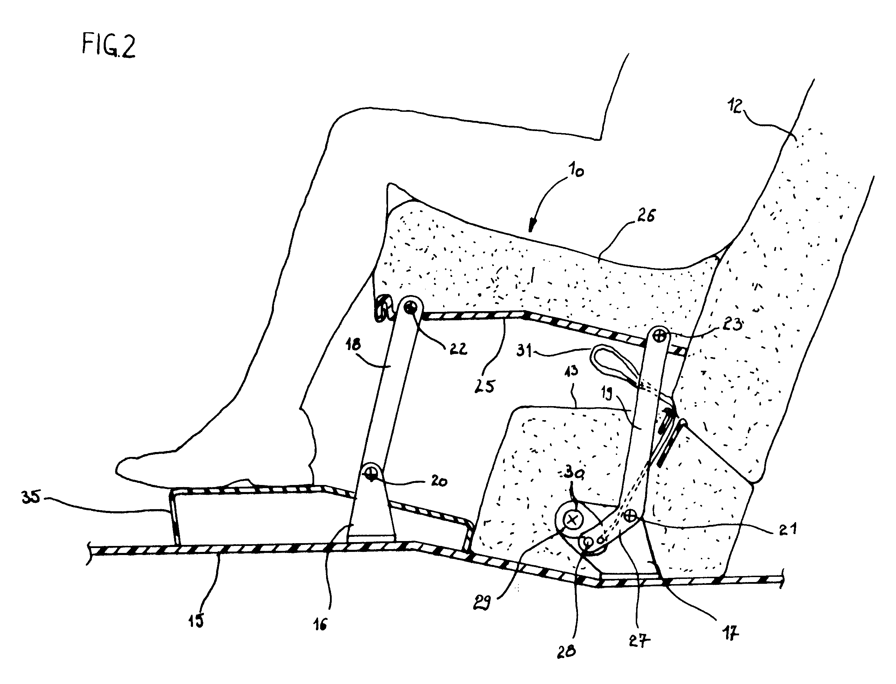

Lors de la manoeuvre du siège en référence des figure 3 et 2, le plan contenant l'axe d'articulation 21 des branches 19 et l'axe transversal 23 occupe successivement une position sensiblement horizontale en position escamotée du siège 10 (fig. 3) et une position sensiblement verticale en position d'utilisation du siège (fig. 2).

Ainsi que le montre la figure 2, le plancher 15 porte un élément de traverse 35 réalisé à partir d'un flan de tôle embouti qui s'incline progressivement vers l'arrière dans le but de retenir le passager sanglé sur la banquette 11 par une ceinture de sécurité conventionnelle 36 et d'éviter son glissement vers l'avant sous l'effet des accélérations longitudinales qui lui sont communiquées au cours des décélérations brutales du véhicule.

Dans le but de faire bénéficier au siège 10 la disposition constructive et fonctionnelle de la banquette 11, le plateau 25 en forme de voûte est encastrable sur la traverse 35 et présente également un plan incliné vers le bas en direction de la partie postérieure du coussin 26.

Le passager enfant, sanglé sur le siège 10, est retenu par une sangle transversale et une sangle diagonale selon une disposition conventionnelle. Dans le but de positionner correctement la sangle transversale sur le haut des cuisses de l'enfant, il peut être prévue une zone d'appui de la sangle sur la flanc de l'ensemble coussin et plateau.

Dans le but d'augmenter le confort de posture du passager enfant, l'élément de structure 35 constitue le repose-pieds dudit passager.

Sans sortir du cadre de l'invention, il est évidemment possible de remplacer les axes 20, 21 ou 22, 23 par des barres de torsion ou de les associer à des ressorts bi-stables dans le but d'obtenir plus aisément l'une ou l'autre position stable du siège.

## Revendications

1. Siège encastré pour le transport d'enfants susceptible d'occuper une position d'utilisation déployée et une position escamotée à l'intérieur d'un logement formé sur une banquette de véhicule automobile, une partie (25) de l'assise dudit siège étant reliée à la structure du véhicule par une liaison mécanique constituée par deux groupes (18, 19) de branches sensiblement parallèles deux à deux selon un plan transversal et respectivement articulées sur ladite partie (25) par une de leurs extrémités et autour de deux axes fixes parallèles portés par la structure par leurs autres extrémités, caractérisé en ce que
a) ladite partie (25) de l'assise est un plateau (25) recouvert d'un coussin (26) formant la partie avant de l'assise du siège dans sa position escamotée et s'étendant vers la partie postérieure de ce dernier par un plan incliné vers le bas et constituant une voûte encastrable sur un élément de structure (35) porteur du siège ;
b) les branches desdits deux groupes (18, 19) sont également sensiblement parallèles l'une (18) à l'autre (19) selon un plan longitudinal, les branches d'un groupe (19) de la liaison mécanique s'étendant en direction de la partie postérieure de la banquette par des parties coudées (27) entretoisées coopérant avec un crochet de retenue (29) porté par la structure.

2. Siège selon la revendication 1, caractérisé par le fait que le plan contenant l'axe d'articulation (21) des branches (19) à parties coudées et l'axe transversal (23) de liaison desdites branches occupe successivement une position sensiblement horizontale en position escamotée du siège et une position sensiblement verticale en position d' utilisation dudit siège.

3. Siège selon la revendication 1, caractérisé par le fait que la partie avant de l'élément de structure (35) porteur du siège constitue un repose-pieds du passager enfant.

## Claims

1. A boxed seat for transporting children able to occupy a deployed position of use and a position retracted within a housing formed on a bench seat of an automotive vehicle, a portion (25) of the seat cushion of this seat being connected to the structure of the vehicle by a mechanical connection formed by two groups (18, 19) of arms substantially parallel in pairs in a transverse plane and articulated respectively about the portion (25) at one of their ends and about two fixed parallel spindles borne by the structure at their other ends, characterized in that
a) the portion (25) of the seat cushion is a plate (25) covered with a cushion (26) forming the front part of the seat cushion of the seat in its retracted position and extending towards the rear portion of the latter in a downwardly inclined plane and forming an arch which can be fitted on a structural member (35) bearing the seat,
b) the arms of the two groups (18, 19) are also substantially parallel to one another in a longitudinal plane, the arms of one group (19) of the mechanical connection extending in the direction of the rear portion of the bench seat via braced elbow members (27) cooperating with a retaining hook (29) borne by the structure.

2. A seat as claimed in claim 1, characterized in that the plane containing the articulation spindle (21) of the arms (19) with elbow sections and the transverse spindle (23) connecting the arms successively occupies a substantially horizontal position in the retracted position of the seat and a substantially vertical position in the position of use of the seat.

3. A seat as claimed in claim 1, characterized in that the front portion of the structural member (35) bearing the seat forms a footrest for the child passenger.

## Patentansprüche

1. Einbausitz für die Beförderung von Kindern, welche eine ausgeklappte Benutzungsstelle und eine eingeklappte Stellung im Inneren eines in einer Kraftfahrzeugsitzbank gebildeten Aussparung einnehmen kann, wobei ein Teil (25) des Sitzteils des Sitzes mit dem Kraftfahrzeugaufbau über eine mechanische Verbindung verbunden ist, die aus zwei Gruppen (18, 19) im wesentlichen paarweise in einer Querebene parallel angeordneter Arme besteht, die mit jeweils einem Ende am Teil (25) angelenkt sind, sowie mit ihren anderen Enden an zwei festen paralleln Achsen angelenkt sind, die mit dem Aufbau verbunden sind, dadurch gekennzeichnet, daß
a) der Teil (25) des Sitzteils eine Platte (25) ist, die mit einem Polster (26) versehen ist, welches den vorderen Teil des Sitzteils des Sitzes in der eingeklappten Stellung bildet und sich zum hinteren Teil des letzteren hin in einer nach unten hin geneigten Ebene erstreckt sowie eine Stütze bildet, die in ein den Sitz tragendes Halteteil (35) einklappbar ist und
b) die Arme der beiden Gruppen (18, 19) paarweise zueinander (18, 19) auch in einer Längsebene parallel sind, wobei sich die Arme einer Gruppe (19) der mechanischen Verbindung in Richtung des hinteren Teils der Sitzbank über dazwischen angeordnete abgebogene Abschnitte (27) erstrecken, die mit einem vom Aufbau getragenen Rückhaltehaken (29) zusammenwirken.

2. Sitz nach Anspruch 1, dadurch gekennzeichnet, daß die Ebene, welche die Gelenkachse (21) der mit den abgebogenen Abschnitten versehenen Arme (19) und die quer verlaufende Verbindungsachse (23) der Arme enthält, nacheinander eine im wesentlichen waagrechte Lage in der eingeklappten Stellung des Sitzes und eine im wesentlichen senkrechte Lage in der Benutzungsstellung des Sitzes einnimmt.

3. Sitz nach Anspruch 1, dadurch gekennzeichnet, daß der vordere Teil des den Sitz tragenden Halteteils (35) eine Fußstütze für den kindlichen Passagier bildet.
